Europäisches Patentamt

European Patent Office

Office européen des brevets

(19)

(11) Numéro de publication: **0 239 502
B1**

(12) # FASCICULE DE BREVET EUROPEEN

(45) Date de publication du fascicule du brevet:
06.06.90

(51) Int. Cl.⁵: **B60N 2/18**

(21) Numéro de dépôt: **87400691.9**

(22) Date de dépôt: **26.03.87**

(54) **Siège réglable pour véhicule automobile.**

(30) Priorité: **28.03.86 FR 8604569**

(43) Date de publication de la demande:
**30.09.87 Bulletin 87/40**

(45) Mention de la délivrance du brevet:
**06.06.90 Bulletin 90/23**

(84) Etats contractants désignés:
**AT BE CH DE ES FR GB IT LI LU NL SE**

(56) Documents cités:
**EP-A- 0 185 536
FR-A- 2 454 042
FR-A- 2 560 757
GB-A- 2 036 159
GB-A- 2 146 743**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Bianchi, François, Combe Saint Germain, F-25700 Valentigney(FR)**
Inventeur: **Duval, Alain, 10, rue de la Fontaine, F-25350 Mandeure(FR)**
Inventeur: **Fourrey, François, 32, rue du Petit Chênois, F-25200 Montbéliard(FR)**

(74) Mandataire: **Polus, Camille et al, c/o Cabinet Lavoix 2, Place d'Estienne d'Orves, F-75441 Paris Cedex 09(FR)**

ACTORUM AG

## Description

Il existe actuellement un très grand nombre de types de dispositif permettant de régler la position des sièges de véhicule que ce soit en inclinaison, en hauteur ou même longitudinalement. Ces dispositifs sont de plus perfectionnés et automatisés, mais ils continuent cependant à poser un problème important à l'utilisateur car les différents déplacements de l'assise et du dossier interfèrent entre eux, ce qui rend difficile la recherche de la position optimale désirée.

Il est connu d'après le FR-A 2 454 042 un siège comportant une armature de dossier et une armature d'assise articulées l'une sur l'autre, l'armature de dossier étant prolongée au-dessous de l'axe d'articulation et reliée à son extrémité inférieure à un dispositif de réglage de l'inclinaison du dossier. L'armature d'assise est associée à des moyens de réglage de sa position en hauteur et est guidée verticalement par la coopération d'un axe avec une lumière ménagée dans un support fixe.

Les déplacements du dossier et de l'assise sont rigoureusement indépendants. Le dossier reste immobile et conserve une même position par rapport au sol lors des déplacements de l'assise et inversement. Par contre, l'inclinaison relative du dossier et de l'assise est modifiée à chaque réglage.

La présente invention a pour but de remédier à l'inconvénient mentionné ci-dessus en fournissant un siège dont les différentes parties peuvent être réglées de façon indépendante sans entraîner de modification du réglage précédent et notamment du réglage de l'inclinaison relative du dossier et de l'assise.

Par rapport au FR-A 2 454 042 qui décrit un siège pour véhicule automobile ou analogue, de chaque côté duquel l'armature du dossier est articulée sur l'armature de l'assise, est prolongée au-delà de l'axe d'articulation et reliée à son extrémité inférieure à un organe pivotant de réglage de l'inclinaison du dossier, et est guidée verticalement par la coopération d'un axe avec une lumière ménagée dans un support fixe, l'armature d'assise étant reliée à des moyens de réglage en hauteur, l'invention est caractérisée en ce que l'axe d'articulation du dossier et de l'assise traverse une lumière verticale qui est légèrement incurvée tandis que l'organe de réglage de l'inclinaison du dossier est monté sur un axe de pivotement porté par l'armature d'assise de sorte que les axes de pivotement et d'articulation forment avec le prolongement inférieur de l'armature du dossier un triangle qui est mobile mais reste indéformable lors de réglages en hauteur du siège et que ces réglages sont indépendants du réglage de l'inclinaison relative du dossier et de l'assise.

Selon un mode de réalisation préféré l'axe de pivotement est fixé sur l'assise et est guidé dans une lumière verticale du flasque de support de façon à pouvoir être déplacé selon une trajectoire en arc de cercle à l'intérieur de cette lumière.

Dans un tel siège, le déplacement vertical de l'avant ou de l'arrière de l'assise, en faisant pivoter le triangle indéformable provoque un basculement du dossier qui maintient le réglage en inclinaison de ce dernier par rapport à l'assise et permet à l'utilisateur de retrouver la position choisie précédemment.

De préférence, le flasque de support constitue l'élément mobile d'une glissière de guidage du déplacement longitudinal de l'ensemble du siège.

Il est ainsi possible de réaliser sans modification importante, un siège susceptible de prendre des positions très diverses ou simplement un siège susceptible d'être réglé en hauteur ou en inclinaison ou même déplacé longitudinalement.

La déscription ci-dessous d'un mode de réalisation donné à titre d'exemple non limitatif et représenté aux dessins annexés, fera d'ailleurs ressortir les avantages et caractéristiques de l'invention.

Sur ces dessins:

– la Fig. 1 est une vue schématique de côté d'un siège selon l'invention;
– la Fig. 2 est une vue schématique de dessus de l'armature d'assise du siège montrant les systèmes moteur;
– la Fig. 3 est une vue en coupe selon la ligne III–III de la Fig. 1;
– la Fig. 4 est une vue en coupe suivant la ligne IV–IV de la Fig. 1.
– la Fig. 5 est une vue de détails à plus grande échelle en coupe suivant la ligne 5–5 de la Fig. 3.
– la Fig. 6 est une vue schématique de côté d'un système de blocage de position;
– la Fig. 7 est une coupe suivant la ligne 7-7 de la Fig. 6.

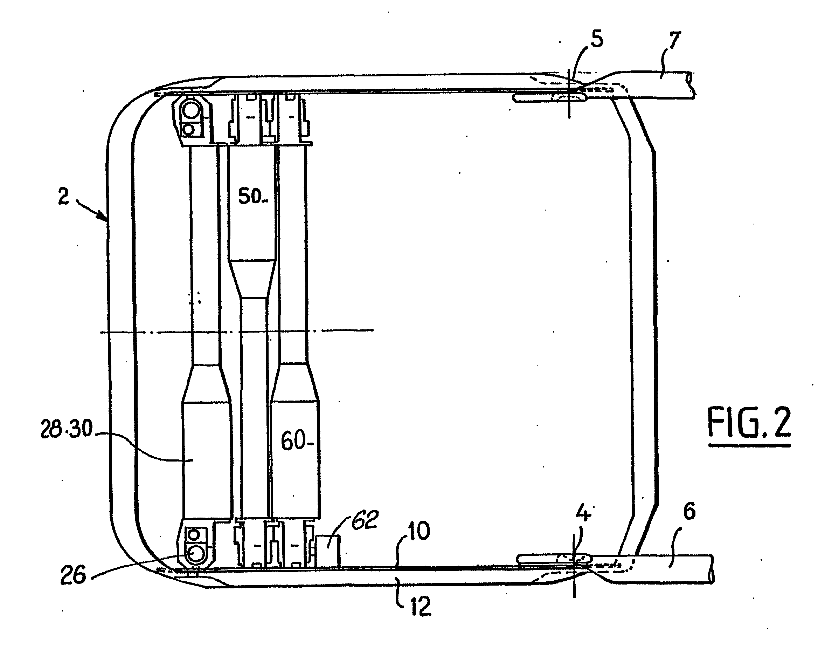

Le siège représenté qui est tout particulièrement adapté à être monté dans un véhicule automobile, comporte une assise 1, dont l'armature comporte un cadre 2 formé, par exemple, par un tube recourbé sur lui même et soudé à ses extrémités. A l'arrière de ce cadre 2 (Fig. 2) sont articulées, en 4 et 5, les deux branches latérales 6 et 7, d'un tube recourbé en U qui constitue l'armature d'un dossier 8.

Chacun des axes 4 et 5 reliant l'armature du dossier à celle de l'assise traverse, entre ces deux organes, un flasque de support 10 qui s'étend parallèlement au tube latéral, correspondant 12 du cadre 2 de l'assise, sur pratiquement toute la longeur de ce tube. Dans le mode de réalisation représenté le flasque 10 comporte deux pattes en saillies vers le haut, dont l'une 14, située à l'arrière du siège, est traversée par l'axe 4 ou 5 d'articulation du dossier, tandis que l'autre 16, située à l'avant de l'assise 1 est traversée par un axe 18 de fixation du tube 12 correspondant sur le flasque 10.

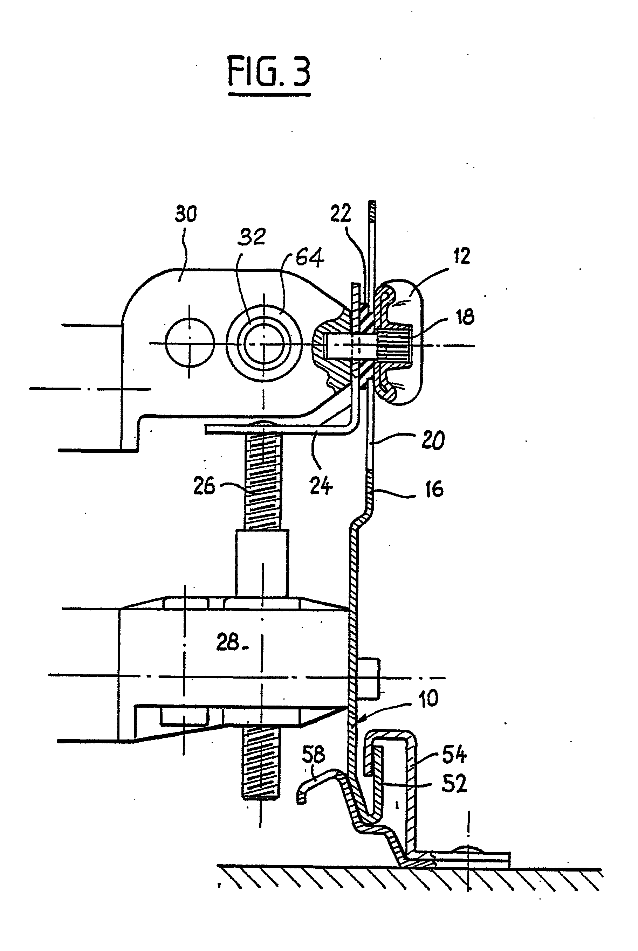

En fait, comme le montre plus particulièrement la Fig. 3, l'axe 18 traverse une lumière verticale 20 de la patte 16 du flasque 10. Il est guidé dans cette lumière par une rondelle en matière plastique ou analogue 22 percée d'une fente transversale 23 et solidaire d'une platine 24 mobile verticalement sous l'action d'une tige filetée 26 entraînée par un motoréducteur 28 lui même monté pivotant sur le flasque 10. Le cadre 2, de l'armature de l'assise étant symétrique par rapport à l'axe longitudinal du siège, le modoréducteur 28 est monté pivotant entre les deux flasques 10 fixés à ce cadre et entraîne de préférence simultanément des tiges filetées 26 montées des deux côtés du siège de sorte qu'une même commande provoque le déplacement vertical uniforme des deux côtés de l'avant de l'assise, c'est à dire le glissement des deux rondelles 22 portant les deux axes 18 dans les lumières 20 et le pivotement de l'ensemble du cadre 2 autour des axes 4 et 5 d'articulation sur le dossier.

L'axe 18, sert également de support à un second motoréducteur 30 qui est susceptible de pivoter sur lui et entraîne par l'intermédiaire, par exemple d'un dispositif renvoi d'angle et vis sans fin, une biellette filetée 32 reliée à la partie inférieure 38 d'une patte plate 34 de prolongement de chacun des bras latéraux 6 et 7 de l'armature du dossier. Le motoréducteur 30 peut ainsi commander, par l'intermédiaire de la biellette 32, le pivotement du dossier autour de ses axes d'articulation 4 et 5, ce déplacement longitudinal de la biellette 32 entraîne celui de l'extrémité 38 de la patte 34 et fait pivoter le motoréducteur 30 autour de l'axe 18 mais ne provoque aucun déplacement en hauteur de cet axe, de sorte que la position de l'assise reste rigoureusement inchangée.

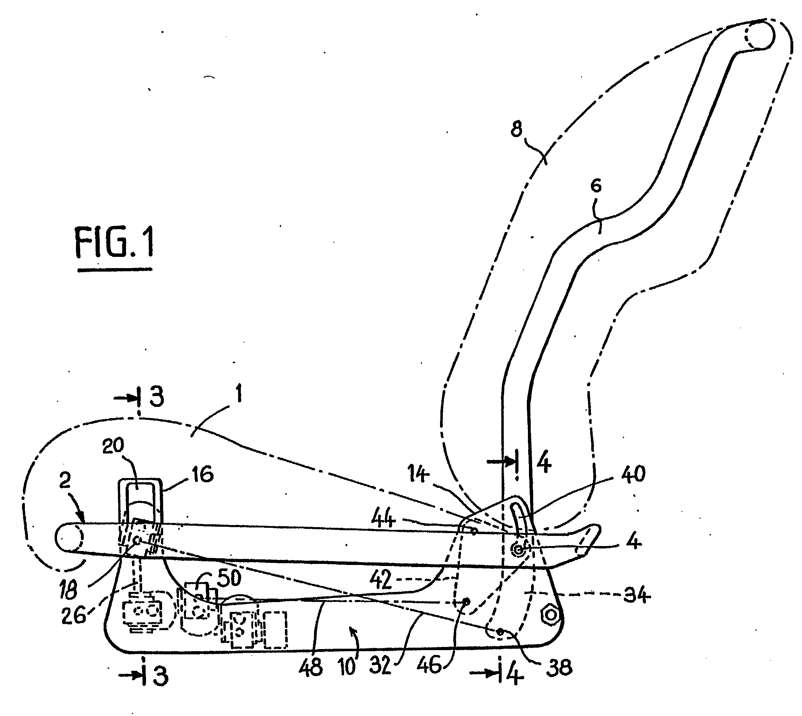

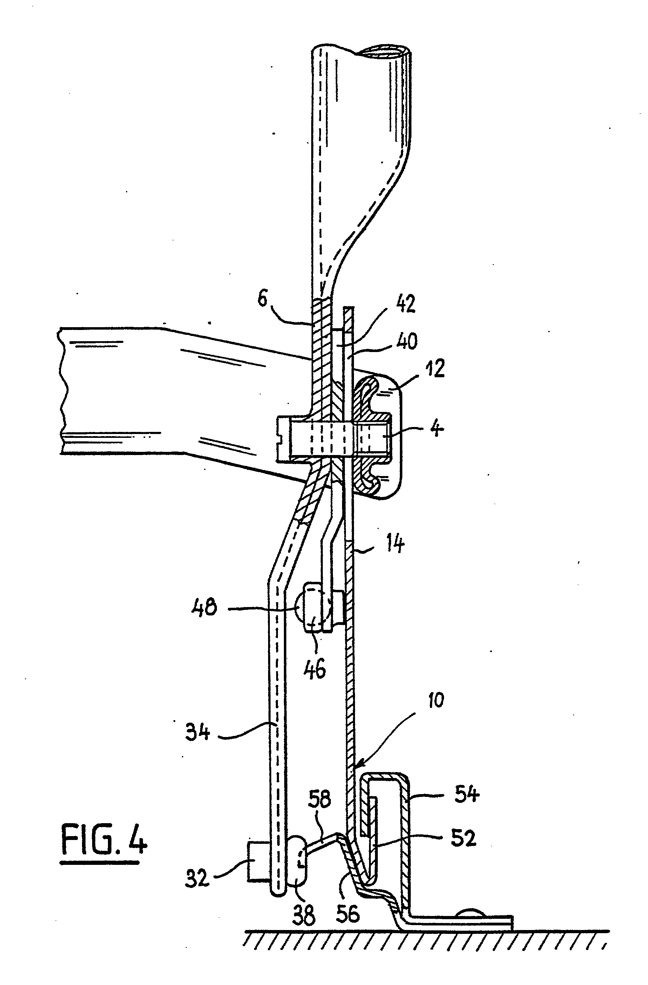

Chacun des axes 4 et 5 d'articulation du dossier et de l'assise est susceptible de se déplacer dans une lumière 40 ménagée dans la patte arrière 14 du flasque 10. Cette lumière est sensiblement verticale, mais légèrement incurvée, sa concavité étant tournée vers la patte avant 16 du flasque. En outre, une plaquette triangulaire 42 est interposée entre la patte 14 du flasque 10 et le bras correspondant 6 ou 7 de l'armature du dossier comme le montre plus particulièrement les Figs. 1 et 4. Cette plaquette 42 qui est traversée par l'axe 4 ou 5 est d'une part articulée en 44 sur la patte 14 du flasque 10 et d'autre part articulée à sa partie inférieure sur l'extrémité 46 d'une biellette filetée 48 entraînée par un système motoréducteur 50 monté pivotant sur le flasque 10. Le déplacement de la biellette 48 fait pivoter la plaquette 42 autour de son articulation 44 sur le flasque et déplace par suite l'axe 4 ou 5 dans la lumière 40 du flasque 10 qui est centrée sur l'axe 44. Par exemple, lorsque la biellette 48 est repoussée sur la droite en considérant la Fig. 1, l'axe 4 est repoussé vers le haut dans la lumière 40, ce qui soulève tout l'arrière de siège, c'est à dire à la fois l'extrémité arrière de l'armature 2 de l'assise et l'armature du dossier 8. Au cours de ce mouvement, les pattes 34 d'extrémité des bras latéraux 6 et 7 de l'armature du dossier sont également soulevées et effectuent le même mouvement que les axes 4 et 5. La biellette 32 pivote alors autour de l'axe 38 tandis que l'axe 18 se déplace dans les lumières 60 et 20. Le triangle formé par les trois axes 18, 4 et 38 se déplace ainsi sans se déformer, de sorte que l'inclinaison du dossier par rapport à l'assise est conservée.

De la même manière, lors d'un soulèvement de l'avant de l'assise sous l'action de la tige filetée 26, l'axe 18 décrit un arc de cercle en se déplaçant horizontalement dans la fente 23 au fur et à mesure de son déplacement vertical dans la lumière 20. Le triangle formé par les axes 18, 4 et 38 pivote mais ne se déforme pas et l'inclinaison du dossier par rapport à l'assise reste inchangée.

Les différents réglages du siège, c'est à dire les réglages en hauteur et le réglage de l'inclinaison de l'assise et du dossier sont ainsi totalement indépendants, de sorte qu'un utilisateur peut modifier à tout moment l'un d'eux sans crainte de perdre le confort apporté par l'autre.

De préférence, le flasque de support 10 est constitué par l'élément mobile d'une glissière de déplacement longitudinal de l'ensemble du siège. Ainsi que le montre plus particulièrement les Figs. 3 et 4, le flasque 10 comporte par exemple à sa partie inférieure un rebord recourbé latéralement et vers le haut 52 qui coopère avec un profilé 54 fixé sur le plancher du véhicule et jouant le rôle d'élément fixe de la glissière. Le profilé 54 peut être complété par une rampe fixe 56 sur laquelle glisse l'extrémité recourbée du flasque 10 de façon à assurer un déplacement précis et régulier. La rampe 56 est prolongée par un rebord 58, muni de crans ou analogues et formant une crémaillère dans lequel vient s'emboîter un organe de blocage de tout type connu qui n'à pas été représenté pour ne pas compliquer le dessin.

Le déplacement longitudinal du siège est de préférence commandé par un système motoréducteur 60 monté entre les deux flasques de support 10 de la même manière que les motoréducteurs 50, 28 et 30. Ce réglage est comme les précédents totalement indépendant et n'entraîne aucune modification ni de la hauteur ni de l'inclinaison du siège.

Les moteurs 60, 50, 28 et 30 sont de préférence des moteurs électriques mais ils peuvent bien entendu être constitués par tout système d'entraînement approprié à commande manuelle ou automatique.

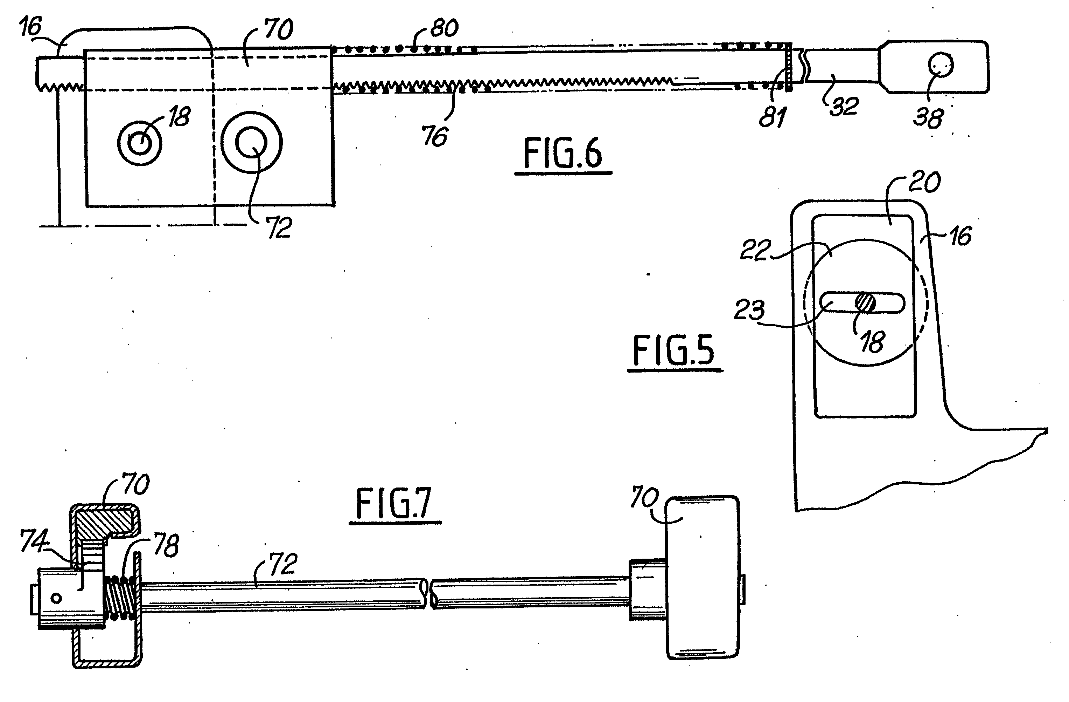

Selon une variante de réalisation l'un ou l'autre de ces systèmes d'entrainement ou même la totalité d'entre eux peut être remplacé par un système de verrouillage. Par exemple comme le montre la Fig. 7, chaque flasque de support 10 porte un boîtier 70 les deux boîtiers étant reliés par une tige coulissante 72 munie à une extrémité d'un poussoir de commande (non représenté). La tige 72 est solidaire d'un cliquet ou analogue 76 qui engrène normalement avec les dents d'une crémaillère 76 porté par la biellette de commande, par exemple la biellette 32 de liaison à la patte 34 du dossier. Un ressort 78 agit entre le boîtier et le cliquet pour maintenir celui-ci en prise. Chaque boîtier 70 dans ce cas est bien entendu monté pivotant sur l'axe 18 et porté par la platine 24 de la même manière que le motoréducteur 30.

Le déplacement axial de la tige 72 sous l'action du poussoir, contre l'action du ressort 78, dégage au contraire le cliquet de la crémaillère et libère celle-ci. Il suffit alors à l'utilisateur d'agir sur le dossier pour lui donner l'inclinaison désirée, le cliquet assurant l'immobilisation dans cette position dès que le poussoir est relaché. De préférence un ressort 80 monté sur la crémaillère entre une butée 81 de celle-ci et le boitier 70 permet de compenser le poids de l'organe à déplacer et facilite ainsi le réglage.

Il apparaitra en outre clairement aux constructeurs que l'un ou l'autre des systèmes de réglages de position, peut aisément être supprimé sans entraîner de modifications importantes dans la structure du siège. En conséquence, le même type de siège peut facilement être utilisé pour toutes les application. La commande de l'inclinaison, du réglage en hauteur ou du déplacement longitudinal étant montée ou non selon les besoins. Une telle possibilité d'adaptation facilite grandement la fabrication en grande série, et permet une réduction importante du prix de revient de l'ensemble, tout en permettant d'assurer à l'utilisateur un confort notablement accru.

## Revendications

1. Siège pour véhicule automobile ou analogue, de chaque côté duquel l'armature (6, 7) du dossier est articulée sur l'armature (2) de l'assise, est prolongée au-delà de l'axe d'articulation (4, 5) et reliée à son extrémité inférieure (38) à un organe pivotant (30) de réglage de l'inclinaison du dossier, et est guidée verticalement par la coopération d'un axe avec une lumière (40) ménagée dans un support fixe, l'armature d'assise (2) étant reliée à des moyens de réglage en hauteur, caractérisé en ce que l'axe d'articulation (4, 5) du dossier et de l'assise traverse une lumière verticale (40) qui est légèrement incurvée tandis que l'organe (30) de réglage de l'inclinaison du dossier est monté sur un axe de pivotement (18) porté par l'armature d'assise (2) de sorte que les axes de pivotement (18) et d'articulation (4, 5) forment avec le prolongement inférieur (38) de l'armature du dossier un triangle qui est mobile mais reste indéformable lors de réglages en hauteur du siège et que ces réglages sont indépendants du réglage de l'inclinaison relative du dossier et de l'assise.

2. Siège suivant la revendication 1, caractérisé en ce que l'axe de pivotement (18) est fixé sur l'assise et est guidé dans une lumière verticale (20) du flasque de support (10) de façon à pouvoir être déplacé selon une trajectoire en arc de cercle à l'intérieur de cette lumière.

3. Siège suivant la revendication 1, caractérisé en ce que l'axe de pivotement (18) est porté par une platine (24) mobile verticalement et guidée dans la lumière verticale (20) du flasque de support (10) en vue du réglage vertical de l'avant de l'assise.

4. Siège suivant l'une des revendications 1 à 3, caractérisé en ce qu'il comporte une plaquette triangulaire (42) articulée (en 44) sur le flasque de support (10), traversée par l'axe (4, 5) d'articulation du dossier sur l'assise, et reliée à un organe de réglage (50) monté sur le flasque de support par une biellette (48) de réglage en hauteur de l'arrière de l'assise.

5. Siège suivant la revendication 4, caractérisé en ce que la plaquette triangulaire (42) est intercalée entre le flasque de support (10) et une portion inférieure applatie (34) du tube (6, 7) d'armature du dossier, du côté interne du tube (12) d'armature de l'assise.

6. Siège suivant l'une des revendications précédentes caractérisé en ce que l'un au moins de l'organe (30) relié au dossier et de l'organe (50) monté sur le flasque (10) est un système d'entraînement de commande du réglage correspondant.

7. Siège suivant l'une des revendications 1 à 5, caractérisé en ce que l'un au moins de l'organe (30) relié au dossier et de l'organe (50) monté sur le flasque (10) est un système de verrouillage du réglage effectué.

8. Siège suivant l'une des revendications précédentes, caractérisé en ce que le flasque de support (10) constitue un élément mobile de glissière de guidage du déplacement longitudinal du siège.

9. Siège suivant la revendication 8, caractérisé en ce que le flasque de support (10), comporte à sa partie inférieure un rebord rabattu (52) qui coopère avec un profilé fixe de guidage (54).

10. Siège suivant l'une des revendications précédentes, caractérisé en ce qu'il comporte entre les deux flasques latéraux de support (10) des systèmes motoréducteurs (30, 50, 60) commandant simmultanément les déplacements des deux côtés du siège.

## Patentansprüche

1. Sitz für ein Kraftfahrzeug oder dergleichen, wobei an jeder Sitzseite die Rückenlehnenanordnung (6, 7) auf der Sitzteilanordnung (2) oder lenkbar befestigt ist, sich über die Schwenkachse (4, 5) hinaus verlängert und an ihrem unteren Ende (38) mit einem Schwenkelement (30) zur Einstellung der Neigung der Rückenlehne verbunden ist, und vertikal durch Zusammenwirken einer Achse mit einem in einer stationären Halterung angebrachten Schlitz (40) geführt wird, und die Sitzanordnung (2) mit Höheneinstellvorrichtungen verbunden ist, dadurch gekennzeichnet, daß die Gelenkachse (4, 5) von Rückenlehne und Sitzteil einen vertikalen Schlitz (40) durchdringt, der leicht gekrümmt ist, während das Einstellelement (30) für die Neigung der Rückenlehne auf einem Schwenkbolzen (18) montiert ist, der von der Sitzanordnung (2) derart getragen wird, daß der Schwenkbolzen (18) und die Gelenkachsen (4, 5) der unteren Verlängerung (38) der Rückenlehnenanordnung ein Dreieck bilden, das beweglich ist aber während der Höheneinstellungen des Sitzes unverformbar bleibt und daß diese Einstellungen unabhängig von der Einstellung der Relativneigung zwischen Rückenlehne und dem Sitzteil sind.

2. Sitz nach Anspruch 1, dadurch gekennzeichnet, daß der Schwenkbolzen (18) auf dem Sitzteil befestigt ist und in einem Vertikalschlitz (20) der Seitenwand der Halterung (10) derart geführt wird, daß er im Inneren dieses Schlitzes längs einer Kreisbogenbahn verschiebbar ist.

3. Sitz nach Anspruch 1, dadurch gekennzeichnet, daß der Schwenkbolzen (18) von einer Platine (24) getragen wird, die vertikal beweglich ist und die in einem Vertikalschlitz (20) der Seitenwand der Halterung (10) im Hinblick auf die Vertikaleinstellung des vorderen Abschnitts des Sitzteils geführt wird.

4. Sitz nach einem der Ansprüche 1 bis 3, dadurch gekennzeichnet, daß er eine dreieckförmige Platte (42) umfaßt, die (bei 44) auf der Seitenwand der Halterung (10) angelenkt ist, die von der Gelenkachse (4, 5) der Rückenlehne am Sitzteil durchdrungen wird, und die mit einem Einstellelement (50) verbunden ist, das an der Seitenwand der Halterung über eine Triebstange (48) zur Höheneinstellung des hinteren Abschnitts des Sitzteils befestigt ist.

5. Sitz nach Anspruch 4, dadurch gekennzeichnet, daß die dreieckförmige Platte (42) zwischen der Seitenwand der Halterung (10) und einem unteren abgeflachten Abschnitt (34) des Rohrs (6, 7) der Rückenlehnenanordnung an der Innenseite des Rohrs (12) der Sitzanordnung eingefügt ist.

6. Sitz nach einem der vorausgehenden Ansprüche, dadurch gekennzeichnet, daß mindestens eines des Elements (30), das mit der Rückenlehne verbunden ist, und des Elements (50), das an der Seitenwand (10) befestigt ist, ein Triebsystem zur Steuerung der zugehörigen Einstellung ist.

7. Sitz nach einem der Ansprüche 1 bis 5, dadurch gekennzeichnet, daß mindestens eins des Elements (30), das mit der Rückenlehne verbunden ist, und des Elements (50), das an der Seitenwand (10) befestigt ist, ein Verriegelungssystem für die erfolgte Einstellung ist.

8. Sitz nach einem der vorausgehenden Ansprüche, dadurch gekennzeichnet, daß die Seitenwand der Halterung (10) ein bewegliches Element einer Gleitführung für die Längsbewegung des Sitzes ist.

9. Sitz nach Anspruch 8, dadurch gekennzeichnet, daß die Seitenwand der Halterung (10) an ihrem unteren Abschnitt einen umgebogenen Rand (52) aufweist, der mit einem stationären Führungsprofil (54) zusammenwirkt.

10. Sitz nach einem der vorausgehenden Ansprüche, dadurch gekennzeichnet, daß er zwischen den beiden Seitenwänden der Halterung (10) Untersetzungsantriebssysteme (30, 50, 60) umfaßt, die gleichzeitig die Bewegungen der beiden Seiten des Sitzes steuern.

**Claims**

1. Seat structure for a motor vehicle or the like, on each side of which the framework (6, 7) of the back is articulated to the framework (2) of the seat, is extended beyond the pivot pin (4, 5) and connected at its lower end (38) to a pivoting member (30) for regulating the slope of the back and is vertically guided by the cooperation of a pin with an opening (40) made in a fixed support, the seat framework (2) being connected to height regulating means, characterized in that the pivot pin (4, 5) of the back and the seat traverses a vertical opening (40), which is slightly inwardly curved, whilst the member (30) for regulating the slope of the back is mounted on a pivot pin (18) carried by the seat framework (2), in such a way that the pivot pins (18; 4, 5) form with the lower extension (38) of the back framework a triangle, which is mobile but remains nondeformable during the height settings of the seat structure and that these settings are independent of the setting of the relative slope of the back and the seat.

2. Seat according to claim 1, characterized in that the pivot pin (18) is fixed to the seat and is guided in a vertical opening (20) of the support side plate (10), so as to be displaceable along a circular arc trajectory within said opening.

3. Seat according to claim 1, characterized in that the pivot pin (18) is carried by a vertically movable plate (24) guided in the vertical opening (20) of the support side plate (10) in order to bring about a vertical setting of the front of the seat.

4. Seat structure according to one of the claims 1 to 3, characterized in that it comprises a triangular plate (42) articulated at (44) to the support side plate (10), traversed by the pivot pin (4, 5) of the back and the seat and connected to a setting member (50) mounted on the support side plate by a link (48) for regulating the height of the rear of the seat.

5. Seat structure according to claim 4, characterized in that the triangular plate (42) is inserted between the support side plate (10) and a flattened lower portion (34) of the back framework tube (6, 7) on the inside of the seat framework tube (12).

6. Seat structure according to one of the preceding claims, characterized in that at least one of the member (30) connected to the back and the member (50) mounted on the side plate (10) is a control drive system for the corresponding setting.

7. Seat structure according to one of the claims 1 to 5, characterized in that at least one member (30) connected to the back or the member (50) mounted to the side plate (10) is a system for locking the setting made.

8. Seat structure according to one of the preceding claims, characterized in that the support side plate (10) constitutes a mobile guide slide element for the longitudinal displacement of the seat structure.

9. Seat structure according to claim 8, characterized in that the support side plate (10) is provided in its lower part with a turned down ledge (52) cooperating with a fixed guide profile (54).

10. Seat structure according to one of the preceding claims, characterized in that it has speed reduction motor systems (30, 50, 60) simultaneously controlling the displacements of the two sides of the seat structure between the two support side plates (10).

FIG.1

FIG.2

# FIG. 3

FIG. 4

FIG.5

FIG.6

FIG.7